# EUROPÄISCHE PATENTSCHRIFT

(11) **EP 2 140 926 B1**
(45) Veröffentlichungstag und Bekanntmachung des Hinweises auf die Patenterteilung: **10.10.2012**
(21) Anmeldenummer: 09008440.1
(22) Anmeldetag: 29.06.2009
(51) Int. Cl.: B01D 53/26, B60T 17/00, F15B 21/04

(54) **Lufttrockner für turboaufgeladene Kompressoren**
Air dryer for turbocharged compressors
Dessicateur d'air pour compresseurs suralimentés

(30) Priorität: 02.07.2008 DE 102008031318
(43) Veröffentlichungstag der Anmeldung: 06.01.2010
(73) Patentinhaber: KNORR-BREMSE Systeme für Nutzfahrzeuge GmbH, 80809 München (DE)
(72) Erfinder: Hilberer, Eduard, 68766 Hockenheim (DE)
(74) Vertreter: Schönmann, Kurt

(56) Entgegenhaltungen:
- EP-A2- 1 964 743
- DE-A1-102007 013 672
- DE-B3- 10 338 162

## Beschreibung

Die Erfindung betrifft einen Lufttrockner für ein Nutzfahrzeug, mit einem Drucklufteingang zum Anschluss eines turbogeladenen Kompressors, einem Druckluftsteuerausgang zur Beeinflussung der Förderleistung des turbogeladenen Kompressors, einem in einer Förderleitung angeordneten Luftfilter zur Aufbereitung von Druckluft und einer Ventileinrichtung zum Freigeben eines Druckluftpfades während einer Regenerationsphase.

Die Erfindung betrifft weiterhin ein Verfahren zum Betreiben eines Lufttrockners für ein Nutzfahrzeug, mit einem Drucklufteingang zum Anschluss eines turbogeladenen Kompressors, einem Druckluftsteuerausgang zur Beeinflussung der Förderleistung des turbogeladenen Kompressors, einem in einer Förderleitung angeordneten Luftfilter zur Aufbereitung von Druckluft und einer Ventileinrichtung zum Freigeben eines Druckluftpfades während einer Regenerationsphase.

Aus der DE 103 38 162 B3 ist ein Verfahren zum Betreiben einer einen Kompressor, einen Druckregler und ein Mehrkreisschutzventil aufweisenden Druckluftbeschaffungsanlage eines Kraftfahrzeuges sowie eine Druckluftaufbereitungseinrichtung bekannt.

Moderne Nutzfahrzeuge verfügen oftmals über druckluftbetriebene Teilsysteme, wie eine druckluftbetriebene Betriebsbremse und Luftfederung, weshalb üblicherweise eine Druckluftversorgungseinrichtung, die einen Kompressor umfasst, in das Nutzfahrzeug integriert wird. Weiterhin verfügt das Nutzfahrzeug normalerweise über einen Verbrennungsmotor, der aus Effizienzgründen oftmals mit einem Turbolader ausgestattet ist. Grundsätzlich bestehen nun zwei verschiedene Möglichkeiten für den Kompressor Umgebungsluft aufzunehmen. Eine Möglichkeit besteht darin vor dem Turbolader unverdichtete Luft anzusaugen, wobei auch einfach Umgebungsluft angesaugt werden kann, während die andere darin besteht, nach dem Turbolader und idealerweise nach einem dem Turbolader zugehörigen Ladeluftkühler bereits vorverdichtete Luft abzuzweigen. Durch das Ansaugen bereits durch den Turbolader komprimierter Luft entsteht, insbesondere bei höheren Motordrehzahlen und hohen Motorlasten, ein stark erhöhter Luftdurchsatz in dem Kompressor. Der dem Kompressor nachgeordnete Lufttrockner muss nun in der Lage sein, die durch die hohe Förderleistung geförderte Luft zu trocknen und, falls erforderlich, das dann gesättigte Trockenmittel zu regenerieren. Hierzu ist es erforderlich, während der Kompressorleerlaufphase, also der Zeit in welcher der Kompressor abgeschaltet ist, möglichst viel Regenerationsluft bei möglichst geringem Gegendruck, der zum Beispiel durch den Schalldämpferstaudruck beeinflusst wird, im Lufttrocknerentlüftungskanal während der Nichtförderphase des Kompressors durch das Trockenmittel strömen zu lassen.

Diese Aufgabe wird mit den Merkmalen der unabhängigen Ansprüche gelöst.

Vorteilhafte Ausgestaltungen und Weiterbildungen der Erfindung ergeben sich aus den abhängigen Ansprüchen.

Der erfindungsgemäße Lufttrockner baut auf dem Stand der Technik dadurch auf, dass der Druckluftsteuerausgang und ein Förderleitungsabsperrventil gemeinsam an einen ersten Knotenpunkt gekoppelt sind, der nach der Freigabe des Druckluftpfades mit Druck beaufschlagt ist. Durch das Förderleitungsabsperrventil wird der durch einen an die Förderleitung angeschlossenen Kompressor erzeugte Gegendruck in der Förderleitung reduziert, wobei die Kopplung an den Druckluftsteuerausgang eine Überbelastung des angeschlossenen Kompressors beziehungsweise des weiterhin von dem Kompressor mit Druck beaufschlagten Teil der Förderleitung vorbeugt, indem die Förderleistung des Kompressors reduziert wird.

Nützlicherweise ist vorgesehen, dass eine weitere Ventileinrichtung vorgesehen ist, die ein an der Förderleitung angeordnetes Ablassventil mit einem daran angeordneten Schalldämpfer pneumatisch vorsteuert. Die Vorsteuerung des Ablassventils durch eine weitere Ventileinrichtung ermöglicht die effiziente Verwendung eines Ablassventils mit großem Ablassquerschnitt, wodurch ebenfalls der Staudruck während einer Regenerationsphase reduzierbar ist.

Vorteilhafterweise kann vorgesehen sein, dass ein Ablassventil als Überdruckventil an der Förderleitung angeordnet ist. Die gleichzeitige Verwendung eines Ablassventils als Überdruckventil in der Förderleitung erlaubt das effiziente Einsparen zusätzlicher Bauteile.

Weiterhin kann vorgesehen sein, dass das Ablassventil in einer Förderphase stromabwärts des Förderleitungsabsperrventils angeordnet ist.

Insbesondere ist vorgesehen, dass eine Drossel in dem Druckluftpfad zwischen einem ersten Knotenpunkt und einem zweiten Knotenpunkt angeordnet ist. Durch die Drossel in dem Druckluftpfad zwischen dem ersten Knotenpunkt und dem zweiten Knotenpunkt ist ein ausreichender Staudruck zum gleichzeitigen Betätigen des Förderleitungsabsperrventils und des Kompressors über den Druckluftsteuerausgang gewährleistet. Weiterhin schützt die Drossel den Luftfilter während einer Regenerationsphase durch die Begrenzung der durchströmenden Luftmenge auf die maximal von dem Luftfilter vertragene Luftmenge.

Vorzugsweise ist vorgesehen, dass die Ventileinrichtung von einem Magnetventil pneumatisch vorsteuerbar ist. Durch die pneumatische Vorsteuerbarkeit der Ventileinrichtung durch ein Magnetventil sind größere Strömungsquerschnitte für den Regenerationsluftpfad mit einfachen baulichen Mitteln realisierbar. Insbesondere kann das verhältnismäßig aufwendige Magnetventil für kleine Betätigungskräfte ausgelegt werden.

Es kann vorgesehen sein, dass ein Druckbegrenzungsventil zwischen einem dritten Knotenpunkt und einem vierten Knotenpunkt angeordnet ist. Durch das Druckbegrenzungsventil sind die empfindlichen Magnetventile des Lufttrockners vor hohen Drücken schützbar.

Vorteilhafterweise wird der Lufttrockner dadurch weiterentwickelt, dass eine pneumatische Steuerleitung ausschließlich über eine Verbindung zwischen dem ersten Knotenpunkt und dem zweiten Knotenpunkt entlüftbar ist. Auf diese Weise kann eine separate Entlüftung für die Steuerleitung eingespart werden, da diese am Ende der Regenerationsphase über die während der Regenerationsphase offene Entlüftung mit entlüftet wird. Weiterhin kann ein eventuell in der pneumatischen Steuerleitung verbleibender Restdruck so eingestellt werden, dass die Ansprechzeit zum Einleiten einer Regenerationsphase optimiert wird.

Es kann vorgesehen sein, dass ein pneumatischer Steuereingang der Ventileinrichtung mit dem ersten Knotenpunkt gekoppelt ist. Durch diese Kopplung wird ein Rückschlagventil in der Verbindung zwischen dem ersten Knotenpunkt und dem zweiten Knotenpunkt überflüssig, da die Funktion dieses Rückschlagventils durch die Ventileinrichtung selbst übernommen werden kann.

Vorzugsweise kann vorgesehen sein, dass der Lufttrockner ein Steuergerät mit einem Anschluss an einen Fahrzeugbus umfasst, das geeignet ist, die Funktionen des Lufttrockners zu steuern. Die Verwendung eines Steuergerätes mit einem Anschluss an den Fahrzeugbus erlaubt das Empfangen und Auswerten fahrdynamischer Daten, die insbesondere Schubphasensituationen des Motors betreffen, und somit Regenerationsphasen des Lufttrockners und Schubphasensituationen zu koordinieren hilft.

Alternativ kann vorgesehen sein, dass die Funktionen des Lufttrockners über ein externes Steuergerät steuerbar sind. Ein externes Steuergerät, insbesondere ein bereits fahrzeugdynamische Daten auswertendes Motorsteuergerät, kann alternativ ebenfalls zur Steuerung der Funktion des Lufttrockners herangezogen werden.

Das gattungsgemäße Verfahren zum Betreiben eines Lufttrockners wird dadurch weiterentwickelt, dass der Druckluftsteuerausgang und ein Förderleitungsabsperrventil gemeinsam über einen Ausgang der Ventileinrichtung mit Druck beaufschlagt werden, der nach der Freigabe des Druckluftpfades mit Druck beaufschlagt ist. Auf diese Weise werden die Vorteile und Besonderheiten des erfindungsgemäßen Lufttrockners auch im Rahmen eines Verfahrens zum Betreiben eines Lufttrockners umgesetzt.

Dies gilt auch für die nachfolgend angegebenen besonders bevorzugten Ausführungsformen des erfindungsgemäßen Verfahrens.

Dieses wird insbesondere dadurch weitergebildet, dass ein an der Förderleitung angeordnetes Ablassventil mit einem daran angeordneten Schalldämpfer pneumatisch über eine weitere Ventileinrichtung vorgesteuert wird.

Vorzugsweise ist zusätzlich vorgesehen, dass die Ventileinrichtung von einem Magnetventil pneumatisch vorgesteuert wird.

Die Erfindung wird nun mit Bezug auf die begleitenden Zeichnungen anhand besonders bevorzugter Ausführungsformen beispielhaft erläutert.

Es zeigen:
- Figur 1: eine erste Ausführungsform eines in einem Nutzfahrzeug angeordneten erfindungsgemäßen Lufttrockners;
- Figur 2: eine zweite Ausführungsform eines in einem Nutzfahrzeug angeordneten erfindungsgemäßen Lufttrockners;
- Figur 3: eine dritte Ausführungsform eines in einem Nutzfahrzeug angeordneten erfindungsgemäßen Lufttrockners;
- Figur 4: eine vierte Ausführungsform eines in einem Nutzfahrzeug angeordneten erfindungsgemäßen Lufttrockners ;
- Figur 5: eine fünfte Ausführungsform eines in einem Nutzfahrzeug angeordneten erfindungsgemäßen Lufttrockners und
- Figur 6: ein Diagramm zur Veranschaulichung des zeitlichen Zusammenspiels mehrerer Ventileinrichtungen des Lufttrockners in verschiedenen Betriebszuständen.

In den folgenden Zeichnungen bezeichnen gleiche Bezugszeichen gleiche oder gleichartige Teile.

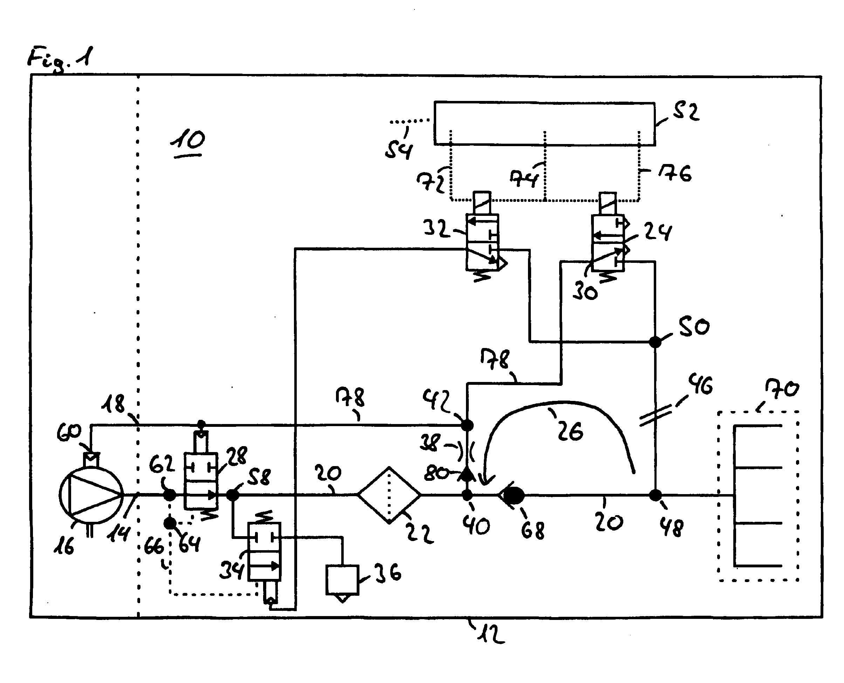

Figur 1 zeigt eine erste Ausführungsform eines in einem Nutzfahrzeug angeordneten erfindungsgemäßen Lufttrockners. Ein Nutzfahrzeug 12 umfasst einen Lufttrockner 10, an den über einen Drucklufteingang 14 ein turbogeladener Kompressor 16 zur Druckluftversorgung angeschlossen ist. Der turbogeladene Kompressor 16 wird von einem nicht dargestellten Turbolader des Nutzfahrzeugs 12 mit bereits vorverdichteter Luft versorgt, wobei die Luftzuführung über zumindest eine der vorhandenen Abgasturboladerstufen erfolgt, um einen möglichst hohen thermodynamischen Gesamtwirkungsgrad beim Betrieb des Kompressors beziehungsweise bei der Druckluftförderung zu erreichen. Der turbogeladene Kompressor 16 wird über einen Kompressorsteuereingang 60 von einem Druckluftsteuerausgang 18 von dem Lufttrockner 10 angesteuert. Der Lufttrockner 10 umfasst einen in einer Förderleitung 20 stromabwärts eines Förderleitungsabsperrventils 28 angeordneten Luftfilter 22 zur Aufbereitung der von dem turbogeladenen Kompressor 16 bereitgestellten Druckluft. Zwischen dem Luftfilter 22 und dem Förderleitungsabsperrventil 28 ist an einem fünften Knotenpunkt 58 ein Ablassventil 34 mit daran angeordnetem Schalldämpfer 36 angeschlossen. Das Ablassventil 34 ist über eine pneumatische Steuerleitung 66 von einem Abzweig 62 der Förderleitung 20 ansteuerbar und kann somit als Sicherheitsüberdruckventil verwendet werden.

Da der Abzweig 62 stromaufwärts des Förderleitungsabsperrventils angeordnet ist, verfügt die pneumatische Steuerleitung 66 über eine Verzweigung 64, über die auch das Förderleitungsabsperrventil 28 ansteuerbar ist. Stromabwärts des Luftfilters 22 ist ein Rückschlagventil 68 angeordnet, das eine unbeabsichtigte Rückströmung in der Förderleitung 20 unterbindet. Die von dem turbogeladenem Kompressor 16 geförderte Druckluft wird über die Förderleitung 20 zu einem Mehrkreisschutzventil 70 weitergeleitet, welches in bekannter Weise einzelne Verbraucherkreise gegeneinander absichert und die bereitgestellte Druckluft auf die einzelnen nicht dargstellten an den Lufttrockner angeschlossenen Verbraucher verteilt. Optional kann ein Druckbegrenzer zur Begrenzung der Betriebsdrücke der Betriebsdrücke integriert sein. Weiterhin sind Überströmventile in serieller Anordnung der einzelnen Kreissicherungsventile zur Absicherung der Betriebsbremse und der Nebenverbraucher sowie der Feststellbremse vorhanden. Ein Hochdruckanschluss zur Versorgung der Luftfederung kann ebenfalls im Bereich des Mehrkreisschutzventils 70 vorgesehen sein. Parallel zu dem Drucklufteingang 14 kann ein nicht dargestellter weiterer Drucklufteingang zur Fremdbefüllung des Lufttrockners 10 bei stehendem Motor durch einen fahrzeugexternen Kompressor vorgesehen sein, der auch stationär ausgeführt sein kann. Der Lufttrockner 10 verfügt des Weiteren über ein Steuergerät 52 mit einem Anschluss 54 an den CAN-Bus, wobei das Steuergerät 52 geeignet ist, Ventileinrichtungen 24, 32 im Rahmen eines Regenerationsbetriebes über elektrische Leitungen 72, 74, 76 anzusteuern. Desweiteren kann das Steuergerät 52 über nicht dargestellte Drucksensoren die unterschiedlichen Druckniveaus in dem Lufttrockner 10 und den angeschlossenen Verbraucherkreisen detektieren. Dabei können insbesondere in den Betriebsbremskreisen Drucksensoren vorgesehen sein. Die Ventileinrichtungen 24, 32 liegen dabei stromabwärts eines vierten Knotenpunktes 50, der über eine Verbindung, in der ein Druckbegrenzungsventil 46 angeordnet ist, mit einem dritten Knotenpunkt 48 verbunden ist, der auf der Förderleitung 20 liegt. Die Ventileinrichtung 24 verfügt über einen Ausgang 30, der über eine pneumatische Leitung 78 einen ersten Knotenpunkt 42 mit Druck beaufschlagt und von dort gleichzeitig das Förderleitungsabsperrventil 28 betätigt und den Druckluftsteuerausgang 18 mit Druck beaufschlagt. Daher wird sowohl das Förderleitungsabsperrventil 28 als auch der turbogeladene Kompressor 16 über den Kompressorsteuereingang 60 angesteuert. Der erste Knotenpunkt 42 ist weiterhin über eine Verbindung in der ein Rückschlagventil 80 und eine Drossel 38 angeordnet sind mit einem zweiten Knotenpunkt 40 der auf der Förderleitung 20 zwischen dem Luftfilter 22 und dem Rückschlagventil 68 liegt, gekoppelt. Durch das Betätigen der Ventileinrichtung 24 wird somit eine Umgehung des auf der Förderleitung 20 angeordneten Regenerationsventils 68 über einen Druckluftpfad 26 ermöglicht. Die weitere Ventileinrichtung 32 ist mit dem Steuereingang des Ablassventils 34 gekoppelt und kann dieses in seinen geöffneten Zustand überführen.

Das in der Verbindung zwischen dem dritten Knotenpunkt 48 und dem vierten Knotenpunkt 50 angeordnete Druckbegrenzungsventil 46 ist optional. Wird die Regenerationsphase beendet, das heißt die Ventileinrichtung 24 wieder in ihren dargestellten Schaltzustand gebracht, so wird die pneumatische Leitung 78 über eine in die Ventileinrichtung 24 integrierte Entlüftung entlüftet, wodurch gleichzeitig die Steuereingänge des turbogeladenen Kompressors 16 und des Förderleitungsabsperrventils 28 entlüftet werden. Der an dem Ablassventil 34 angeordnete Schalldämpfer 36 erzeugt einen Staudruck während einer Regenerationsphase von etwa 0,8 bar und senkt dadurch die Effizienz um etwa 30%. Aus Lärmschutzgründen kann jedoch nicht einfach völlig auf den Schalldämpfer verzichtet werden. Weiterhin dauert eine typische Regenerationsphase etwa 30 Sekunden. Während dieser Zeitspanne müssen zwischen 50 und 60 Liter Normluft durch den Luftfilter 22 geleitet werden, um eine ausreichende Regeneration des Trockenmittels zu gewährleisten. Die gesamte Anlagen fast nur ein Volumen von etwa 80 Normlitern.

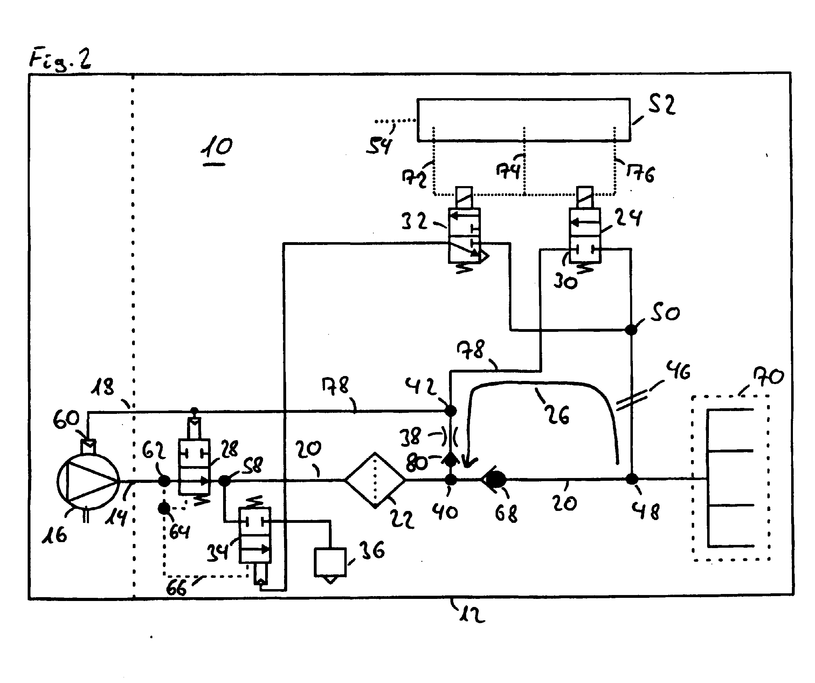

Figur 2 zeigt eine zweite Ausführungsform eines in einem Nutzfahrzeug angeordneten erfindungsgemäßen Lufttrockners. Die in Figur 2 dargestellte zweite Ausführungsform ähnelt in weiten Teilen der in Figur 1 dargstellten ersten Ausführungsform, wobei die Ventileinrichtung 24 nunmehr über keine eigene Entlüftung verfügt und als 2/2-Wegeventil ausgeführt sein kann. Die Entlüftung der pneumatischen Leitung 78 erfolgt am Ende der Regenerationsphase über den ersten Knotenpunkt 42, den zweiten Knotenpunkt 40 und die Förderleitung 20 bis zu dem Ablassventil 34 mit dem daran angeordneten Schalldämpfer 36. Sobald das Druckniveau in der pneumatischen Steuerleitung 78 unter einem zum Ansteuern des turbogeladenen Kompressors 16 und/oder des Förderleitungsabsperrventils 28 notwendigen Wert sinkt, ist die Regenerationsphase beendet und die Druckluftförderung in der Förderleitung 20 kann wieder aufgenommen werden. Auf diese Weise ist auch eine Spülfunktion der Förderleitung 20 realisierbar. Der Druckabfall in der pneumatischen Steuerleitung 78 nach dem Schließen der Ventileinrichtung 24 ist berechenbar beziehungsweise kann über einen in der pneumatischen Steuerleitung 78 anzuordnenden Drucksensor detektiert werden. Das Steuergerät 52 kann das Ablassventil 34 über die weitere Ventileinrichtung 32 nach Ablauf einer berechneten Zeitspanne Δt nach dem Schließen der Ventileinrichtung 24 schließen, um die Regenerationsphase des Lufttrockners zu beenden. Alternativ kann auch das Einsetzen der Luftförderung in der Förderleitung 20 über den Drucksensor in der pneumatischen Steuerleitung 78 detektiert werden. Vorteilhaft bei dieser Ausführungsform ist insbesondere, dass die Ventileinrichtung 24 nicht über eine eigene Entlüftung verfügen muss. Das Entlüften der pneumatischen Steuerleitung 78 über das Ablassventil 34 und den Schalldämpfer 36 kann schnell erfolgen, da der erfindungsgemäße Lufttrockner 10 bereits auf einen großen Regenerationsluftdurchsatz pro Zeiteinheit optimiert wurde.

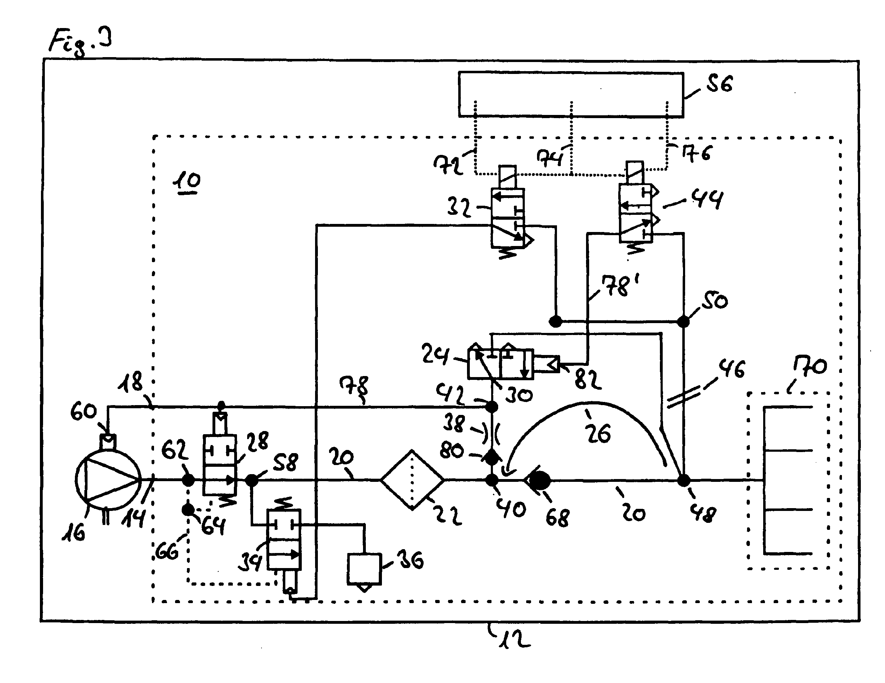

Figur 3 zeigt eine dritte Ausführungsform eines in einem Nutzfahrzeug angeordneten erfindungsgemäßen Lufttrockners. Im Gegensatz zu den ersten beiden Ausführungsformen ist nunmehr die Ventileinrichtung 24, die analog zu der ersten Ausführungsform wieder über eine eigene Entlüftung verfügt, von einem Magnetventil 44 über eine pneumatische Leitung 78' an einen pneumatischen Steuereingang 82 vorgesteuert. Vorteilhafterweise ist die Druckversorgung der Ventileinrichtung 24 direkt mit dem dritten Knotenpunkt 48 gekoppelt, wodurch insbesondere das zwischen dem dritten Knotenpunkt 48 und dem vierten Knotenpunkt 50 angeordnete Druckbegrenzungsventil 46 umgangen wird. Im Gegensatz zu den Ausführungsformen aus den Figuren 1 und 2 verfügt die in Figur 3 dargestellte Ausführungsform nicht über ein integriertes Steuergerät, sondern ist an ein externes Steuergerät 56 angeschlossen, wobei jedoch klar ist, dass jede Ausführungsform sowohl mit einem internen oder einem externen Steuergerät betreibbar ist.

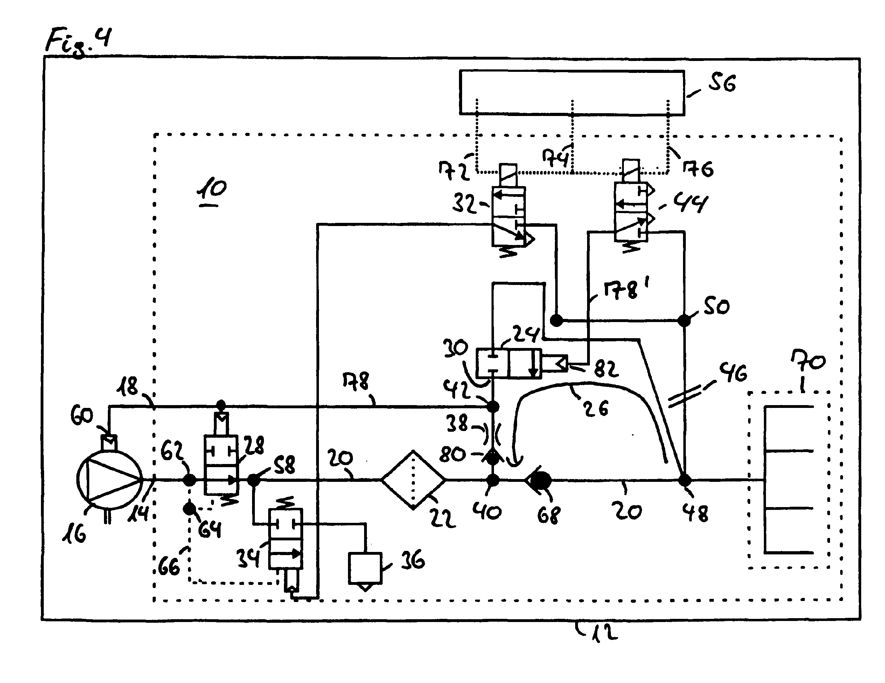

Figur 4 zeigt eine vierte Ausführungsform eines in einem Nutzfahrzeug angeordneten erfindungsgemäßen Lufttrockners. Analog zu der zweiten Ausführungsform besitzt die Ventileinrichtung 24 keine eigene Entlüftung, weshalb die pneumatische Steuerleitung 78 wieder über das Ablassventil 34 und den Schalldämpfer 36 entlüftet wird. Analog zu der dritten Ausführungsform ist die Druckversorgung der Ventileinrichtung 24 unter Umgehung des Druckbegrenzungsventils 46 vorgesehen.

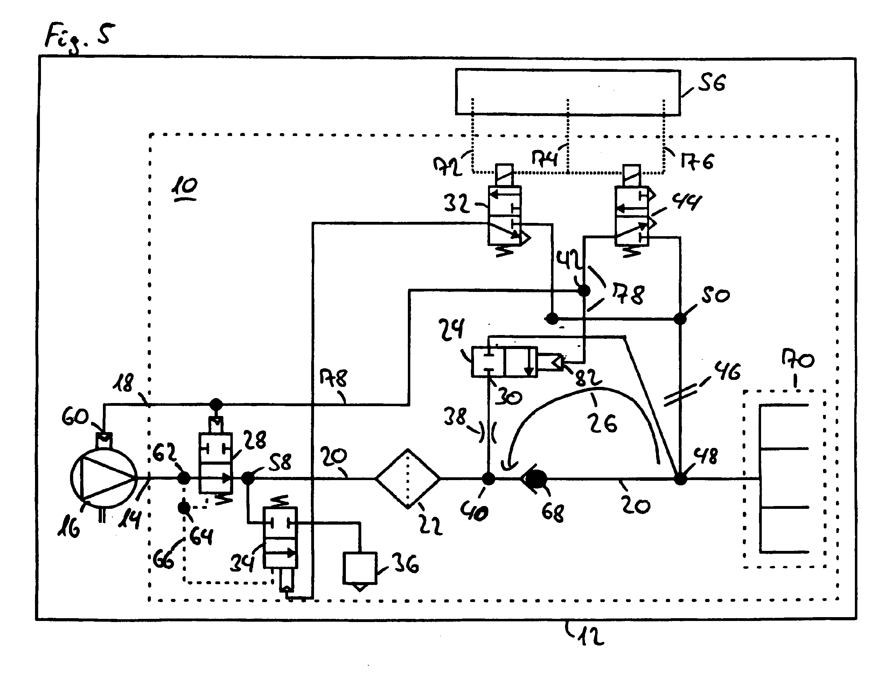

Figur 5 zeigt eine fünfte Ausführungsform eines in einem Nutzfahrzeug angeordneten erfindungsgemäßen Lufttrockners. Bei dieser Ausführungsform steuert das Magnetventil 44 über die pneumatische Leitung 78 sowohl die Ventileinrichtung 24 als auch das Förderleitungsabsperrventil 28 und den Druckluftsteuerausgang 18 an. Der während der Regenerationsphase freigegebene Druckluftpfad 26 zur Umgehung des Rückschlagventils 68 beginnt daher bei dem dritten Knotenpunkt und verläuft direkt über die Ventileinrichtung 24 über die Drossel 38 bis zu dem zweiten Knotenpunkt 40. Eine Verbindung zwischen dem ersten Knotenpunkt 42 und dem zweiten Knotenpunkt 40 existiert nicht mehr und das zuvor vorhandene Rückschlagventil kann eingespart werden, da die Ventileinrichtung 24 seine Funktion übernehmen kann. Das zwischen dem dritten Knotenpunkt 48 und dem vierten Knotenpunkt 50 angeordnete Druckbegrenzungsventil 46 ist wiederum optional.

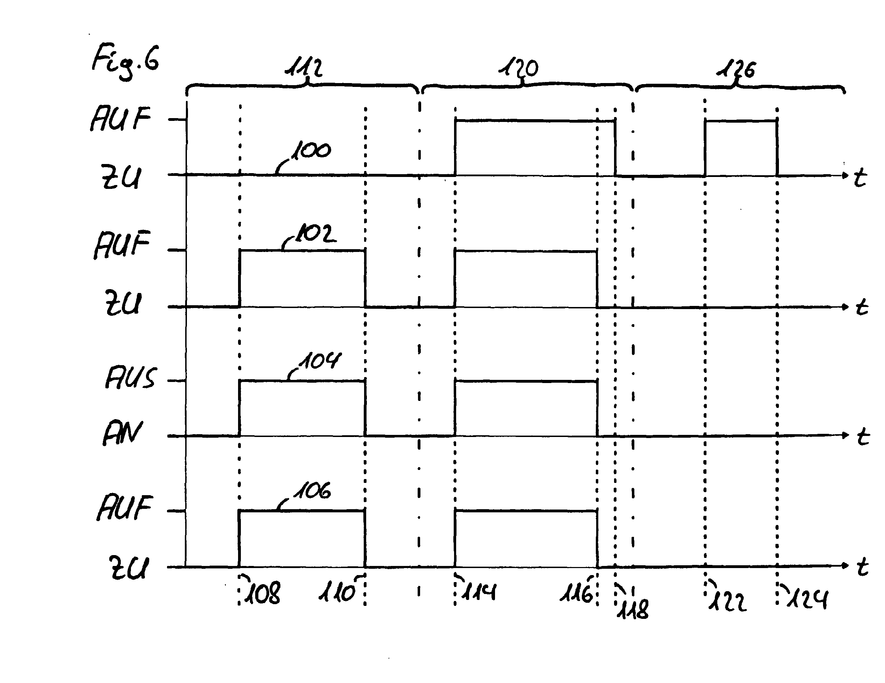

Figur 6 zeigt ein Diagramm zur Veranschaulichung des zeitlichen Zusammenspiels mehrerer Ventileinrichtungen in verschiedenen Betriebszuständen. Gegen die Zeit aufgetragen sind eine erste Schaltzustandskurve 100, die den Schaltzustand des aus den vorherigen Zeichnungen bekannten Ablassventils 34 beschreibt, eine zweite Schaltzustandskurve 102, die den Schaltzustand der aus den vorherigen Zeichnungen bekannten Ventileinrichtung 24 beschreibt, eine dritte Schaltzustandskurve 104, die den Betriebszustand des aus den vorherigen Figuren bekannten Kompressors 16 beschreibt, und eine vierte Schaltzustandskurve 106, die den Schaltzustand des aus den vorherigen Figuren bekannten Förderleitungsabsperrventil 28 beschreibt. Ein Zeitraum 112 mit einer Leerlaufphase des Kompressors ohne gleichzeitige Regeneration ist zeitlich vor einem Zeitraum 120 mit einer Regenerationsphase und einem Zeitraum 126 mit einer Spülphase dargestellt. Während des Zeitraums 112 mit einer Leerlaufphase ohne gleichzeitige Regeneration bleibt das Ablassventil geschlossen, weshalb die zugehörige erste Schaltzustandskurve 100 während des Zeitraums 112 durchgängig einem geschlossenen Zustand des Ablassventils entspricht. Die der zweiten Schaltzustandskurve 102 zugeordnete Ventileinrichtung wird zu einem Zeitpunkt t₁ 108 in ihren geöffneten Schaltzustand überführt, wodurch auch der der dritten Schaltzustandskurve 104 zugeordnete Kompressor in seinen Leerlaufbetriebszustand beziehungsweise in seinen geöffneten Zustand überführt wird. Zu einem Zeitpunkt t₂ 110 wird die Leerlaufphase durch das Schließen der der zweiten Schaltzustandskurve 102 zugeordneten Ventileinrichtung beendet. Gleichzeitig werden auch der der dritten Schaltzustandskurve 104 zugeordnete Kompressor und das der vierten Schaltzustandskurve 106 zugeordnete Förderleitungsabsperrventil in ihre Ausgangszustände zurückgeführt. Der an den Zeitraum 112 anschließende Zeitraum 120 mit einer Regenerationsphase ist hinsichtlich der zweiten Schaltzustandskurve 102, der dritten Schaltzustandskurve 104 und der vierten Schaltzustandskurve 106, die analog zu dem Zeitraum 112 Betätigungen zu einem Zeitpunkt t₃ 114 und zu einem Zeitpunkt t₄ 116 aufweisen, identisch. Zu dem Zeitpunkt t₃ 114 wird jedoch auch das der ersten Schaltzustandskurve 100 zugeordnete Ablassventil geöffnet, so dass eine Regenerationsphase eingeleitet wird. Das Ablassventil wird zu einem Zeitpunkt t₅ 118 wieder geschlossen. Der Zeitpunkt t₅ 118 kann zeitlich später als der Zeitpunkt t₄ 116 liegen, was eine Spülung der Förderleitung ermöglicht. Zwischen den Zeitpunkten t₄ 116 und t₅ 118 ist das der ersten Schaltzustandskurve 100 zugeordnete Ablassventil geöffnet und die der zweiten Schaltzustandskurve 102 zugeordnete Ventileinrichtung 24 wieder geschlossen, weshalb auch der der dritten Schaltzustandskurve 104 zugeordnete Kompressor Druckluft fördert und das der vierten Schaltzustandskurve 106 zugeordnete Förderleitungsabsperrventil geöffnet ist. An den Zeitraum 120 mit Regenerationsphase schließt sich der Zeitraum 126 mit einer Spülphase an. Während einer Spülphase ist nur das der ersten Schaltzustandskurve 100 zugeordnete Ablassventil geöffnet, während die der zweiten Schaltzustandskurve 102 zugeordnete Ventileinrichtung geschlossen bleibt. Demzufolge wird während einer Spülphase in dem Zeitraum 126 die Druckluftförderung durch den der dritten Schaltzustandskurve 104 zugeordneten Kompressor nicht unterbrochen. Beginn und Ende der Spülphase werden beispielhaft zu einem Zeitpunkt t₆ 122 und einem Zeitpunkt t₇ 124 eingeleitet beziehungsweise beendet.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Lufttrockner
- 12: Nutzfahrzeug
- 14: Drucklufteingang
- 16: turbogeladener Kompressor
- 18: Druckluftsteuerausgang
- 20: Förderleitung
- 22: Luftfilter
- 24: Ventileinrichtung
- 26: Druckluftpfad
- 28: Förderleitungsabsperrventil
- 30: Ausgang
- 32: weitere Ventileinrichtung
- 34: Ablassventil
- 36: Schalldämpfer
- 38: Drossel
- 40: zweiter Knotenpunkt
- 42: erster Knotenpunkt
- 44: Magnetventil
- 46: Druckbegrenzungsventil
- 48: dritter Knotenpunkt
- 50: vierter Knotenpunkt
- 52: Steuergerät
- 54: Anschluss
- 56: externes Steuergerät
- 58: fünfter Knotenpunkt
- 60: Kompressorsteuereingang
- 62: Abzweig
- 64: Verzweigung
- 66: pneumatische Steuerleitung
- 68: Rückschlagventil
- 70: Mehrkreisschutzventil
- 72: elektrische Leitung
- 74: elektrische Leitung
- 76: elektrische Leitung
- 78: pneumatische Leitung
- 78': pneumatische Leitung
- 80: weiteres Rückschlagventil
- 82: pneumatischer Steuereingang
- 100: erste Schaltzustandskurve
- 102: zweite Schaltzustandskurve
- 104: dritte Schaltzustandskurve
- 106: vierte Schaltzustandskurve
- 108: Zeitpunkt t₁
- 110: Zeitpunkt t₂
- 112: Zeitraum mit Leerlaufphase ohne Regeneration
- 114: Zeitpunkt t₃
- 116: Zeitpunkt t₄
- 118: Zeitpunkt t₅
- 120: Zeitraum mit Regenerationsphase
- 122: Zeitpunkt t₆
- 124: Zeitpunkt t₇
- 126: Zeitraum mit Spülphase

## Patentansprüche

1. Lufttrockner (10) für ein Nutzfahrzeug (12), mit
- einem Drucklufteingang (14) zum Anschluss eines turbogeladenen Kompressors (16),
- einem Druckluftsteuerausgang (18) zur Beeinflussung der Förderleistung des turbogeladenen Kompressors (16),
- einem in einer Förderleitung (20) angeordneten Luftfilter (22) zur Aufbereitung von Druckluft und
- einer Ventileinrichtung (24) zum Freigeben eines Druckluftpfades (26) während einer Regenerationsphase,
**dadurch gekennzeichnet, dass** der Druckluftsteuerausgang (18) und ein Förderleitungsabsperrventil (28) gemeinsam an einen ersten Knotenpunkt (42) gekoppelt sind, der nach der Freigabe des Druckluftpfades (26) mit Druck beaufschlagt ist.

2. Lufttrockner (10) nach Anspruch 1, **dadurch gekennzeichnet, dass** eine weitere Ventileinrichtung (32) vorgesehen ist, die ein an der Förderleitung (20) angeordnetes Ablassventil (34) mit einem daran angeordneten Schalldämpfer (36) pneumatisch vorsteuert.

3. Lufttrockner (10) nach Anspruch 1 oder 2, **dadurch gekennzeichnet, dass** ein Ablassventil (34) als Überdruckventil an der Förderleitung (20) angeordnet ist.

4. Lufttrockner (10) nach Anspruch 2 oder 3, **dadurch gekennzeichnet, dass** das Ablassventil (34) in einer Förderphase stromabwärts des Förderleitungsabsperrventils (28) angeordnet ist.

5. Lufttrockner (10) nach einem der vorhergehenden Ansprüche, **dadurch gekennzeichnet, dass** eine Drossel (38) in dem Druckluftpfad (26) zwischen einem ersten Knotenpunkt (40) und einem zweiten Knotenpunkt (42) angeordnet ist.

6. Lufttrockner (10) nach einem der vorhergehenden Ansprüche, **dadurch gekennzeichnet, dass** die Ventileinrichtung (24) von einem Magnetventil (44) pneumatisch vorsteuerbar ist.

7. Lufttrockner (10) nach einem der vorhergehenden Ansprüche, **dadurch gekennzeichnet, dass** ein Druckbegrenzungsventil (46) zwischen einem dritten Knotenpunkt (48) und einem vierten Knotenpunkt (50) angeordnet ist.

8. Lufttrockner (10) nach einem der vorhergehenden Ansprüche, **dadurch gekennzeichnet, dass** eine pneumatische Steuerleitung (78) ausschließlich über eine Verbindung zwischen dem ersten Knotenpunkt (42) und dem zweiten Knotenpunkt (40) entlüftbar ist.

9. Lufttrockner nach einem der Ansprüche 6 oder 7, **dadurch gekennzeichnet, dass** ein pneumatischer Steuereingang (82) der Ventileinrichtung (24) mit dem ersten Knotenpunkt (42) gekoppelt ist.

10. Lufttrockner (10) nach einem der vorhergehenden Ansprüche, **dadurch gekennzeichnet, dass** der Lufttrockner (10) ein Steuergerät (52) mit einem Anschluss an einen Fahrzeugbus (54) umfasst, das geeignet ist, die Funktionen des Lufttrockners zu steuern.

11. Lufttrockner (10) nach einem der Ansprüche 1 bis 9, **dadurch gekennzeichnet, dass** die Funktionen des Lufttrockners (10) über ein externes Steuergerät (56) steuerbar sind.

12. Verfahren zum Betreiben eines Lufttrockners (10) für ein Nutzfahrzeug (12), mit
- einem Drucklufteingang (14) zum Anschluss eines turbogeladenen Kompressors (16),
- einem Druckluftsteuerausgang (18) zur Beeinflussung der Förderleistung des turbogeladenen Kompressors (16),
- einem in einer Förderleitung (20) angeordneten Luftfilter (22) zur Aufbereitung von Druckluft und
- einer Ventileinrichtung (24) zum Freigeben eines Druckluftpfades (26) während einer Regenerationsphase,
**dadurch gekennzeichnet, dass** der Druckluftsteuerausgang (18) und ein Förderleitungsabsperrventil (28) gemeinsam über einen Ausgang (30) der Ventileinrichtung (24) mit Druck beaufschlagt werden, der nach der Freigabe des Druckluftpfades (26) mit Druck beaufschlagt ist.

13. Verfahren nach Anspruch 12, **dadurch gekennzeichnet, dass** ein an der Förderleitung (20) angeordnetes Ablassventil (34) mit einem daran angeordneten Schalldämpfer (36) pneumatisch über eine weitere Ventileinrichtung (32) vorgesteuert wird.

14. Verfahren nach Anspruch 12 oder 13, **dadurch gekennzeichnet, dass** die Ventileinrichtung (24) von einem Magnetventil (44) pneumatisch vorgesteuert wird.

## Claims

1. Air dryer (10 for a commercial vehicle (12), comprising
- a compressed-air inlet (14) for connection to a turbo-charged compressor (16),
- a compressed-air control outlet (18) for influencing the delivery rate of said turbo-charged compressor (16),
- an air filter (22) disposed in a delivery line (20) for processing compressed-air, and
- a valve means (24) for releasing a compress-air path (26) during a regeneration phase,
**characterised in that** said compressed-air control outlet (18) and a delivery line shut-off valve (28) are jointly coupled to a first nodal point (42) that is pressurised upon release of said compressed-air path (26).

2. Air dryer (10) according to Claim 1, **characterised in that** a further valve means (32) is provided that pilots pneumatically a shut-off valve (34) with a sound absorber (36) disposed thereon, which is arranged on said delivery line (20).

3. Air dryer (10) according to Claim 1 or 2, **characterised in that** a drain valve (34) is disposed as pressure relief valve on said delivery line (20).

4. Air dryer (10) according to Claim 2 or 3, **characterised in that** in a delivery phase said drain valve (34) is arranged downstream of said delivery line shut-off valve (28).

5. Air dryer (10) according to any of the preceding Claims, **characterised in that** a throttle (38) is disposed in said compressed-air path (26) between a first nodal point (40) and a second nodal point (42).

6. Air dryer (10) according to any of the preceding Claims, **characterised in that** said valve means (24) is adapted to be pneumatically piloted by a solenoid-controlled valve (44).

7. Air dryer (10) according to any of the preceding Claims, **characterised in that** a pressure-limiting valve (46) is arranged between a third nodal point (48) and a fourth nodal point (50).

8. Air dryer (10) according to any of the preceding Claims, **characterised in that** a pneumatic control line (78) is adapted to be vented exclusively via a connection between said first nodal point (42) and said second nodal point (40).

9. Air dryer according to any of the Claims 6 or 8, **characterised in that** a pneumatic control input (82) of said valve means (24) is coupled to said first nodal point (42).

10. Air dryer (10) according to any of the preceding Claims, **characterised in that** the air dryer (10) includes a controller (52) with a connector to a vehicle bus (54), which is suitable for control of the functions of said air dryer.

11. Air dryer (10) according to any of the Claims 1 to 9, **characterised in that** the functions of the air dryer (10) are controllable through an external controller (56).

12. Method of operating an air dryer (10) for a commercial vehicle (12), comprising
- a compressed-air inlet (14) for connection to a turbo-charged compressor (16),
- a compressed-air control outlet (18) for influencing the delivery rate of said turbo-charged compressor (16),
- an air filter (22) disposed in a delivery line (20) for processing compressed-air, and
- a valve means (24) for releasing a compress-air path (26) during a regeneration phase,
**characterised in that** said compressed-air control outlet (18) and a delivery line shut-off valve (28) are jointly pressurised via an outlet (30) of said valve means (24), which outlet is pressurised upon release of said compressed-air path (26).

13. Method according to Claim 12, **characterised in that** a drain valve (34) with a sound absorber (36) arranged thereon, which is disposed on said delivery line (20), is pneumatically piloted via a further valve means (32).

14. Method according to Claim 12 or 13, **characterised in that** said valve means (24) is pneumatically piloted by a solenoid-controlled valve (44).

## Revendications

1. Dessicateur (10) d'air pour un véhicule (12) utilitaire, comprenant
- une entrée (14) pour de l'air comprimé pour le raccordement d'un compresseur (16) suralimenté,
- une sortie (18) de commande pour l'air comprimé pour influencer la puissance utile du compresseur (16) suralimenté,
- un filtre (22) à air, qui est monté dans un conduit (20) de transport et qui est destiné à la préparation d'air comprimé et
- un dispositif (24) de vanne pour libérer un trajet (26)
pour l'air comprimé pendant une phase de régénération, **caractérisé en ce que** la sortie (18) de commande pour l'air comprimé et une vanne (28) d'arrêt du conduit de transport sont reliées conjointement à un premier noeud (42), qui, après la libération du trajet (26) pour l'air comprimé, est mis sous pression.

2. Dessicateur (10) d'air suivant la revendication 1, **caractérisé en ce qu'**il est prévu un autre dispositif (32) de vanne, qui pilote pneumatiquement une vanne (34) d'évaluation montée sur le conduit (20) de transport et ayant un atténuateur (36) de bruit qui y est monté.

3. Dessicateur (10) d'air suivant la revendication 1 ou 2, **caractérisé en ce qu'**une vanne (34) d'évacuation est montée en tant que vanne de surpression sur le conduit (20) de transport.

4. Dessicateur (10) d'air suivant la revendication 2 ou 3, **caractérisé en ce que** la vanne (34) d'évacuation est montée dans une phase de transport en aval de la vanne (28) d'arrêt du conduit de transport.

5. Dessicateur (10) d'air suivant l'une des revendications précédentes, **caractérisé en ce qu'**un étranglement (38) du trajet (26) pour de l'air comprimé est monté entre un premier noeud (20) et un deuxième noeud (22).

6. Dessicateur (10) d'air suivant l'une des revendications précédentes, **caractérisé en ce que** le dispositif (24) de vanne peut être piloté pneumatiquement par une électrovanne (44).

7. Dessicateur (10) d'air suivant l'une des revendications précédentes, **caractérisé en ce qu'**une vanne (46) de limitation de la pression est montée entre un troisième noeud (48) et un quatrième noeud (50).

8. Dessicateur (10) d'air suivant l'une des revendications précédentes, **caractérisé en ce qu'**un conduit (78) pneumatique de commande peut être purgé exclusivement par une liaison entre le premier noeud (42) et le deuxième noeud (40).

9. Dessicateur (10) d'air suivant l'une des revendications 6 ou 7, **caractérisé en ce qu'**une entrée (82) pneumatique de commande du dispositif (24) de vanne est reliée au premier noeud (42).

10. Dessicateur (10) d'air suivant l'une des revendications précédentes, **caractérisé en ce que** le dessicateur (10) d'air comprend un appareil (52) de commande ayant un raccord à un bus (54) de véhicule, qui est propre à commander les fonctions du dessicateur d'air.

11. Dessicateur (10) d'air suivant l'une des revendications 1 à 9, **caractérisé en ce que** les fonctions du dessicateur (10) d'air peuvent être commandées par un appareil (56) extérieur de commande.

12. Procédé pour faire fonctionner un dessicateur (10) d'air d'un véhicule (12) utilitaire comprenant
- une entrée (14) pour de l'air comprimé pour le raccordement d'un compresseur (16) suralimenté,
- une sortie (18) de commande pour l'air comprimé pour influencer la puissance utile du compresseur (16) suralimenté,
- un filtre (22) à air, qui est monté dans un conduit (20) de transport et qui est destiné à la préparation d'air comprimé et
- un dispositif (24) de vanne pour libérer un trajet (26) pour l'air comprimé pendant une phase de régénération,
**caractérisé en ce que** l'on alimente en pression la sortie (18) de commande pour l'air comprimé et une vanne (28) d'arrêt du conduit de transport conjointement par une sortie (30) du dispositif (24) de vanne, sortie qui, après la libération du trajet (26) pour l'air comprimé, est alimentée en pression.

13. Procédé suivant la revendication 12, **caractérisé en ce que** l'on pilote pneumatiquement par un autre dispositif (32) de vanne une vanne (34) d'évacuation montée sur le conduit (20) de transport et ayant un atténuateur (36) de bruit qui y est monté.

14. Procédé suivant la revendication 12 ou 13, **caractérisé en ce que** l'on pilote pneumatiquement le dispositif (24) de vanne par une électrovanne (44).
